# EUROPEAN PATENT APPLICATION

(11) **EP 2 629 136 A1**
(43) Date of publication of application: **21.08.2013**
(21) Application number: 12155689.8
(22) Date of filing: 16.02.2012
(51) Int. Cl.: G02B 27/22, G02B 27/09, G02B 5/02, F21V 5/00

(54) **Using micro optical elements for depth perception in luminescent figurative structures illuminated by point sources**

(71) Applicant: Koninklijke Philips Electronics N.V., 5621 BA Eindhoven (NL)
(72) Inventor: Gommans, Hans, 5600 AE Eindhoven (NL)
(74) Representative: Damen, Daniel Martijn

(57) **Abstract**

The invention provides a lighting unit comprising a light source and a transmissive optical plate, wherein the light source comprises a light exit surface for light source light, wherein the transmissive optical plate comprises an upstream face directed to the light exit surface of the light source and a downstream face arranged away from the light exit surface) of the light source, wherein the optical plate comprises a 2D array of micro optical elements for refraction of the light source light in a direction away of the downstream face, wherein the geometrical path length from the light exit surface to the transmissive optical plate is at least 20 cm.

## Description

### FIELD OF THE INVENTION

The invention relates to a lighting unit comprising a light source and an optical plate as well as to the use of such lighting unit.

### BACKGROUND OF THE INVENTION

The production of 3D images with light is known in the art. WO/2005/117458, for instance, describes an apparatus and method for displaying 3D images. The apparatus comprises: a) a screen with angular dependent diffusion characteristics for direction selectively forwarding light; b) a screen illuminating system, the screen illuminating system comprising multiple modules for generating multiple light beams incident on points of the screen, the modules being arranged so that each point of the screen is illuminated by multiple modules, and the incident light beams generated by one module are projected into multiple different directions from the module towards multiple different points of the screen, and further the different incident light beams generated by one module are forwarded towards different emitting directions from the screen, means for coding each incident light beam with the image information of a single image point in the module, where the 3D image perceived by an observer being generated by multiple modules; c) a control system to control the modules; and d) means for imparting an exit divergence to the exiting light beams being transmitted through or reflected from the screen, the measure of the exit divergence substantially corresponding to the angle between neighboring emitting directions associated with the optically neighboring modules, so as to provide a substantially continuous motion parallax in the 3D image perceived by an observer.

The apparatus described in WO/2005/117458 comprises imaging means for generating the incident light beams with a convergent section converging substantially towards a point of the screen, where a convergence of the incident light beams is substantially equal to the exit divergence of the light beams exiting the screen. The modules can be video projectors, LED projectors, the optical engines of these, or the like, arranged periodically shifted, preferably in the horizontal direction and the diffuser screen is realized as a holographic screen, arrays of diffractive or refractive elements, retro reflective surfaces, or any combination thereof, for imparting a larger divergence to the exit light beams along at least one, preferably in the vertical direction, while in the other direction the angle of divergence provided by the screen is smaller than the angle between the neighboring emitting directions associated with the optically neighboring modules.

### SUMMARY OF THE INVENTION

In addition to generating 3D images, it has been found that it may be of interest to generate virtual 3D lamps or luminaires. Such virtual 3D luminaires may show visually appealing and surprising 3D-like lighting effects. Depth perception may arise from a variety of depth cues that can be classified into monocular and binocular cues. A potential optical technology in 3D displays may be based on lenticulars which are classified under refractive micro-optical elements. The lenticular based 3D display uses stereopsis (binocular cue) that creates the perception of depth from two slightly different proj ections onto the retinas of the two eyes. These refractive optical elements are able to create stereopsis. On the other hand, diffractive optical elements (DOEs) (holograms) also create depth perception. DOEs rely on (monocular) cues such as perspective, focus and motion parallax.

Prior art systems often suffer from a substantial light loss and/or have a complicated construction. Hence, it is an aspect of the invention to provide an alternative lighting unit for virtual 3D light projection with motion parallax, which is (thus) able to create a spatial extensive impression including depth. Such alternative lighting unit preferably further at least partly obviates one or more of above-described drawbacks.

For the projection of virtual 3D luminaires, the creation of 3D effects with minimal optical losses, meaning that the optical efficiency should be - 70%, is defined to be paramount. This favors the usage of refractive elements, as light absorption by the transparent structures, such as PMMA structures, is small compared to photosensitive silver halide films used in holograms. The advantage of using monocular cues on the other hand is that the observer's position and orientation do not need extensive addressing as would be the case for stereopsis.

Now, surprisingly it appears that for instance it is possible to create a spatial extensive impression including depth (such as ring, sphere and 8- shape) via monocular cues (perspective, focus and motion parallax) of a collection of LED point source using low loss refractive optical structures. In an embodiment, LED light sources are placed on a considerable distance (such as at least 20 cm, especially at least ≥25 cm) from a micro cone array element in order to create circular structures with perceived depth.

Hence, in a first aspect, the invention provides a lighting unit comprising a light source and a transmissive optical plate (herein also indicated as "optical plate" or "plate"), wherein the light source comprises a light exit surface for light source light, wherein the transmissive optical plate comprises an upstream face directed to the light exit surface of the light source and a downstream face arranged away (facing away) from the light exit surface of the light source, wherein the optical plate comprises at least a 2D array of micro optical elements (herein also indicated as "optical elements") for refraction of the light source light in a direction away of the downstream face, wherein the geometrical path length for light source light from the light exit surface to the transmissive optical plate is at least 20 cm. In a further aspect, the invention also provides the use of such the lighting unit, wherein the lighting unit comprises a plurality of light exit surfaces, to provide a virtual 3D light projection with motion parallax.

With the above lighting unit, in a relative simple way a virtual 3D light source is provided with motion parallax. Parallax is a displacement or difference in the apparent position of an object viewed along two different lines of sight. With motion parallax, it is indicated that parallax is perceived when moving relative to the lighting unit (especially when moving along the lighting unit). With the lighting unit, a point like light source (more precisely, a light source with a point like light exit surface (see also below)) may be converted into a virtual circle line like light source and a light source with a circlular geometry may be converted into a virtual sphere like light source.

The micro optical array (2D array of micro optical elements) between the (LED) light source and the observer is able to change the point source Lambertian emitter into a spatially extended structure. The size of this extended structure may linearly be related to the distance between the point source and the micro array (see also below). The observer's focus is on contrast between the set of the micro elements that direct the LED light into the retina and the ones that are not. With respect to motion parallax, as the observer changes position, the geometry of the light source (such as LED(s)) - micro element array - observer is changed. The set of micro elements that appears luminescent to the observer changes accordingly. Hence, the circular figure appears to the observer as from behind the micro element array. The perspective cue is created via variations in luminous intensity of the micro elements: the optical path between LED source and observer may determine the luminous intensity. As the distance is shortened (the observer approaches the light source) the 3D light projection, such as a circular figure, appears brighter which corresponds to a real luminescent light source.

The light source is indicated to have a light exit surface. Light exit surfaces of lamps are for instance lamp envelopes of fluorescent lamps, LED (light emitting diode) dies, or light outcoupling features at a waveguide surface.

A relevant parameter is the distance between the light exit surface and the optical plate. This distance is also indicated as geometrical path length, as in embodiments wherein the light source illuminates the optical plate in an indirect way, the geometrical path length has to be taken (i.e. the length a ray travels between the light exit surface and the optical plate. Hence, in an embodiment, the light source is configured to illuminate the upstream face in an indirect way (i.e. including (specular) reflection) and in another embodiment, the light source is configured to illuminate the upstream face in a direct way (i.e. without reflection). Hence, the geometrical path length is the length a ray will travel from the light exit surface to the transmissive optical plate, when the (light exit surface of the) light source is configured to illuminate the transmissive optical plate, either directly or indirectly (such as via a mirror; see also below).

Another advantageous parameter may be that the upstream face is illuminated inhomogeneously. The 2D pattern of light on the upstream face is translated by the optical plate and due to the distance between the light exit surface and the optical plate into a virtual 3D pattern (with motion parallax). Hence, the light source is especially configured to illuminate the upstream face inhomogeneously.

The terms "upstream" and "downstream" relate to an arrangement of items or features relative to the propagation of the light from a light generating means (here the especially the light source), wherein relative to a first position within a beam of light from the light generating means, a second position in the beam of light closer to the light generating means is "upstream", and a third position within the beam of light further away from the light generating means is "downstream".

The 2D array of optical elements in general comprises a regularly arranged plurality of optical elements. The optical elements are configured to have refractive properties. Light source light entering the upstream face leaves the downstream face of the optical plate while being refracted by the optical elements. The optical elements may for instance comprise cones or pyramids. Other shapes may also be possible, like tetrahedrons. Herein, also truncated cones, tetrahedrons or pyramids may be used. Further, also other shapes may be used, such as pentagonal pyramids, triangular cupolas, square cupolas, pentagonal cupolas, pentagonal rotunda s, or elongated types thereof like elongated cones, elongated square pyramids, elongated tetrahedrons, elongated pentagonal pyramids, elongated triangular cupolas, elongated square cupolas, elongated pentagonal cupolas, elongated pentagonal rotundas. The optical elements may be regularly shaped, but may also be irregularly or asymmetrically shaped. All such optical elements have a tapered shape, pointing away from the lighting unit (or pointing away from the downstream face, or directing away from the exit surface(s)). In an embodiment, optical elements are chosen, which have a cross section at the base which has a hexagonal, rectangular or circular shape. A combination of different types of optical elements may optionally also be applied.

The downstream face may comprise for instance 25-1.10⁶ micro optical elements, like 100-1.10⁴ (i.e. for instance 5x5-1,000x1,000 micro optical elements, like 10x10-100x100). The phrase "at least a 2D array of micro optical elements" may also relate to a plurality of such arrays, such as two or more sets of 2D arrays of micro optical elements. In an embodiment, wherein multiple sets of 2D arrays of micro optical elements are applied, these may be comprised in a single optical plate. However, the lighting unit may also comprise plurality of optical plates, each comprising one or more sets of 2D arrays of micro optical elements, hence a 3D arrangement of micro optical elements. The optical plates may be arranged adjacent to each other, and may be arranged in the same plane. However, they may also be arranged with an angle with respect to each other. The 2D arrays may, in an embodiment, be arranged under an angle with respect to each other, or may, in another embodiment, be arranged parallel to each other. A 2D arrangement may also be obtained by a combination of lines of 1D arrangements of micro optical elements. In a specific embodiment, the 2D array comprises a curvature (i.e. the optical elements are arranged in a curved plane). Hence, in a specific embodiment, the optical plate may comprise a curvature in the plane of the 2D array. In yet another embodiment, the 2D array is arranged in a flat plane (i.e. the bases or bottoms of the micro optical elements are arranged in a flat plane). Especially, the optical plate is a flat plate (with one face comprising the micro optical elements). Further, in an embodiment a single (flat) optical plate is applied with a 2D array.

The dimensions at the base of the optical elements may for instance be in the range of 0.05- 10 mm, especially 0.1-5 mm, like 0.2-2 mm. The term micro optical element is used to indicate that the optical elements are small. Here, dimensions refer to length and width, or in the case of optical elements having a circular cross section, like a cone, the diameter. The apex angle(s) (which is in the case of a cone the cone angle) of the optical elements is especially in the range of 90-150°, even more especially in the range of 100-145°, yet even more especially 108-140°. The plurality of micro optical elements may all have the same apex angles, but the apex angles may also vary, regularly or irregularly distributed over the optical plate.

In a specific embodiment, the micro optical elements have conical shapes, directing away from the exit surface, with cone angles (α) in the range of 100-145°, and wherein the cones have a diameter (w) at the base of the cone in the range of 0.1-5 mm. With larger or smaller apex angles (or cone angles in the case of cones), the desired properties may not be obtained. For instance, too much light may be lost due to total internal reflection. In a further specific embodiment, the micro optical elements have conical shapes, directing away from the exit surface, with cone angles (α) in the range of 108-140°. In yet another embodiment, the optical plate comprises prismatic optical elements, such as a micro prism array plate.

The optical plate is transmissive. This implies that at least part of the light of the light source light enters the upstream face and leaves the optical plate at the downstream face (as lighting unit light, i.e. the light that creates the virtual 3D effect). Especially, the optical plate has a light transmission in the range of 50-100 %, especially in the range of 70-100%, for light generated by the light source and having a wavelength selected from the visible wavelength range. In this way, the optical plate is transmissive for visible light from the lighting unit. Herein, the term "visible light" especially relates to light having a wavelength selected from the range of 380-780 nm. The transmission or light permeability can be determined by providing light at a specific wavelength with a first intensity to the material and relating the intensity of the light at that wavelength measured after transmission through the material, to the first intensity of the light provided at that specific wavelength to the material (see also E-208 and E-406 of the CRC Handbook of Chemistry and Physics, 69th edition, 1088-1989).

Especially, the light source comprises a plurality of light exit surfaces. For instance, the light source may comprise a plurality of light emitting devices (LEDs). The term light source may also relate to a plurality of light sources. Optionally, the plurality of light emitting devices have two or more subsets which emit at different wavelengths. In this way, also a color effect may be created. In yet another embodiment, the plurality of light exit surfaces comprise a plurality of light outcoupling structures. In this way, a (2D) feature of light (i.e. the 2D pattern of light on the upstream face) may be created, which is visible at the upstream face of the optical plate.

The plurality of light exit surfaces may for instance relate 3-1.10⁶ light exit surfaces, such as 6-1.10⁴ light exit surfaces, like 10-1000 light exit surfaces.

In a specific embodiment, the light exit surface has a surface area in the range of 0.1- 25 mm², such as in the order of 0.5-4 mm², especially 0.5-1 mm². The exit surface is thus especially a point light source, having an exit surface area of equal to or less than 25 mm², especially equal to or less than 4 mm², even more equal to or less than mm². Hence, preferably point light sources are applied, such as LEDs or (small) outcoupling features.

Hence, for instance a light guiding plate with (extraction) (Lambertian) scattering dot pattern in a circular shape can be applied. An alternative can be a light emissive tube in which LED light is coupled into. Light can be extracted via scattering dots on the back side of the tube, such that the exiting rays travel towards the observer via the optical plate, such as a micro prism array plate.

The light source is preferably configured to be provide light (escaping from the light exit surface) having a Lambertian distribution.

In an embodiment, the plurality of light exit surfaces are arranged in a circle or in an ellipse. In this way, the 2D pattern of light on the upstream face may be a circle or ellipse (of light). In yet another embodiment, the light source is configured to generate a (hollow) square, or a hollow hexagonal shape, etc. etc.

When the light source(s) is configured to generate a circle or ellipse of light at the upstream face of the optical plate, and especially when using conically shaped optical elements, a virtual 3D sphere or sphere like object is created. Hence, for instance, the lighting unit may, especially when comprising a plurality of light exit surfaces arranged in a circle or in an ellipse and comprising conically shaped optical elements, be used to provide a virtual 3D spherical light projection with motion parallax.

In an embodiment, the light source is configured to illuminate the upstream face in an indirect way. For instance, one or more mirrors may be used to reflect the light of the light sources in the direction of the optical plate (i.e. its upstream face). Such embodiments may be used to decrease the thickness or width of the lighting unit. Hence, in order to further lower the total height of the assembly one can apply one or more specular mirrors. In this manner the distance of for instance about 25 cm is created virtually. Optionally, a curvature in the specular reflector may help to increase the optical efficiency of the assembly as rays normal to the optical plate have higher transmission efficiency.

Further, it appears advantageous to apply a collimator. Hence, in an embodiment the lighting unit further comprises a collimator configured to collimate the light source light and configured between the light exit surface and the optical plate. The collimator in front of the light exit surface, such as the die of a LED package, may especially be required in order to prevent total internal reflection in the optical elements, such as prismatic cones, for angles of incidence that exceed 7 degrees with respect to a normal to the upstream face. Hence the collimating element is advantageously applied to collimate as much as possible within preferably 14° full angle. Less collimation will still work, but, as explained, may reduce the optical efficiency of the luminous flux exiting the prismatic plate.

The term "substantially" herein, such as in "substantially all emission" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterising features described in the description and/or shown in the attached drawings. The invention further pertains to a method or process comprising one or more of the characterizing features described in the description and/or shown in the attached drawings.

The various aspects discussed in this patent can be combined in order to provide additional advantages. Furthermore, some of the features can form the basis for one or more divisional applications.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs.la-ld schematically depict some aspects and embodiments of the invention;
Figs. 2a-2c schematically depict some variations on embodiments;
Figs. 3a-3d schematically depict some aspects of the invention; The drawings are not necessarily on scale.
Figs. 4a-4b show some photographs of the virtual 3D luminaire created with the lighting unit of the invention.

### DETAILED DESCRIPTION OF THE EMBODIMENTS

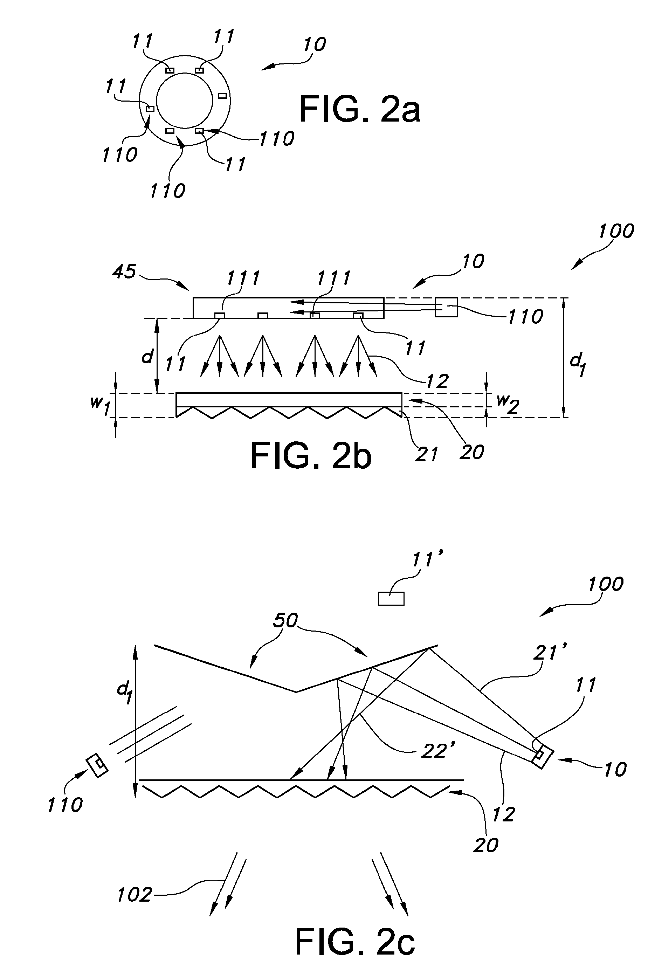

Fig. la schematically depicts lighting unit 100. The lighting unit 100 comprises a light source 10 and a transmissive optical plate 20. The light source 10 comprises a light exit surface 11 for light source light 12. In general, the light source will comprise a plurality of light sources and/or a plurality of light exit surfaces 11 (see also figs. 2a-2c).

The transmissive optical plate 20 comprises an upstream face 23 directed to the light exit surface 11 of the light source 10 and a downstream face 24 facing away from the light exit surface 11 of the light source. The upstream face 23 is downstream of the light source 10, but upstream of the downstream face 24; the downstream face 24 is downstream of the upstream face 23 and downstream of the light source 10. Light 12 of the light source 10 is transmitted through the optical plate 20 in a direction from the upstream face 23 to the downstream face 24. Light escaping from the downstream face 24 is indicated as lighting unit light 102. This light may be perceived by an observer.

The optical plate 20 comprises a 2D array of micro optical elements 21 for refraction of the light source light 12 in a direction away of the downstream face 24 (in this schematical drawing, which may be interpreted as a cross section, only one array of 4 optical elements is schematically depicted by way of example). The optical elements here point in a direction away from the light source 10 and the light exit surface 11, and in a direction away from the downstream face 24.The geometrical path length d (a light ray will travel) from the light exit surface 11 to the transmissive optical plate (20) is at least 20 cm. Here, this distance is the same as the distance between the light exit surface 11 to the upstream face 23. Optical plate 20 in this embodiment is a substantially flat plate, with micro optical elements 21 comprised at the downstream face.

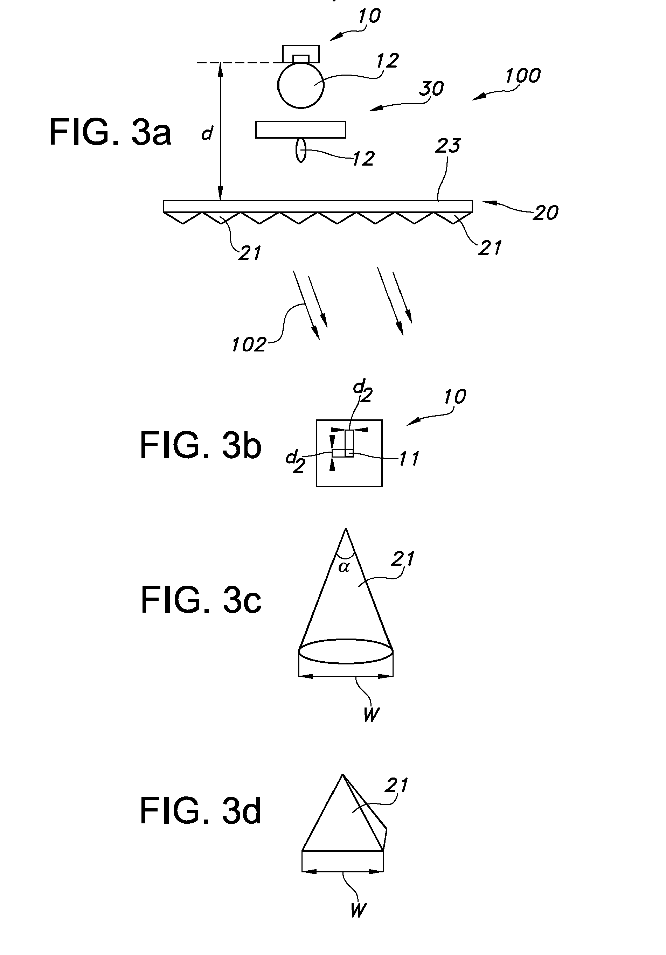

Reference d1 indicates the entire thickness of the lighting unit 100. The thickness d1 may for instance be in the range of 50-400 mm, but also smaller or larger. Angle a indicates the apex angle of the micro optical elements 21. The micro optical elements point in a direction away from the light exit surface(s) 11. Reference 22 indicates the surface(s) of the micro optical elements. These surfaces form a tapered structures (i.e. the optical elements 21), with, as indicated above, especially pointing in a direction away from the light exit surface 11. Reference w1 indicates the width of the optical plate 20, including micro optical elements 21. Further, reference w indicates the width (or diameter, where applicable) at the bottom of the optical element 21 (see also figures 3c-3d). The optical plate 20 schematically depicted in the drawings is a flat plate.

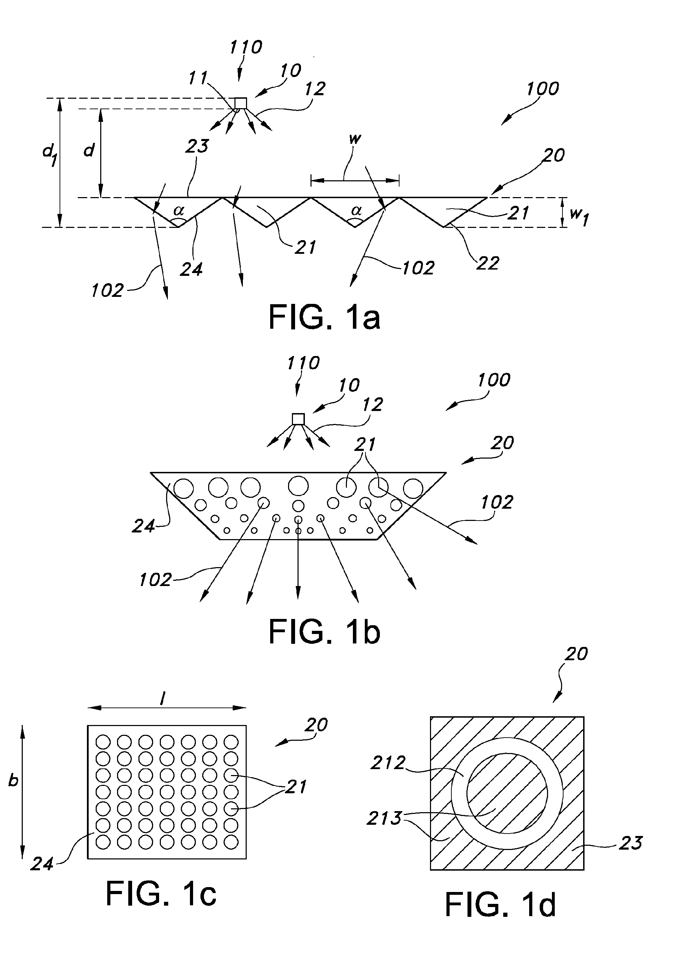

Fig. 1b schematically depicts a perspective view of the optical plate, from below, showing that a few micro optical elements 21 (at downstream face 24) provide light 102. This may give the 3D perception; light 102 originates from a virtual 3D source.

Fig. 1c shows a top (of bottom view in fact) of the optical plate 20, with the downstream face 24 seen (from below; i.e. seen by an observer downstream of the lighting unit and viewing the downstream face of said lighting unit). An array of 7x7 micro optical elements 21 is shown by way of example. The dimensions of the plate 20, here length 1 and width b, but in case of a circular plate the diameter, may for instance be in the range of 5-1,000 cm, such as 10-500 cm, like 20-200 cm.

Fig. 1d schematically depicts that the upstream face 23 of the optical plate 20 is not illuminated homogeneously. There is a (substantially) illuminated area 212 and a (substantially) non-illuminated area 213. The light source (not shown in this figure), is configured to inhomogeneously illuminate the upstream face 23. Here, in the schematically depicted embodiment, the illuminated area has the shape of a hollow circle (see also Fig. 2a).

Fig. 2a schematically shows an embodiment of the light source 10 comprising a plurality of light exit surfaces 11. For instance, the light source 10 may comprise a plurality ofLEDs 110. The schematically depicted light source 10 may provide a spherical 3D like virtual luminaire with motion parallax when applied in the lighting unit of the invention. The light source 10 of fig. 2a may for instance provide a hollow circular illuminated area 212, as schematically depicted in fig. 1d, on the upstream face 23 of the optical plate 20. Each light exit surface 11 may have an area of 0.1- 25 mm². Especially, the areas are equal to or smaller than 4 mm². The light exit surface 11 preferably provide light with a Lambertian distribution.

Fig. 2b schematically depicts an embodiment of the light source 10 comprising for instance a LED light source 110, configured to couple light of the LED light source 110 into a waveguide 45. The waveguide 45 comprises a plurality of light outcouple structures 111, which have the function of light exit surfaces 11. Here, the optical plate has a thickness w1, with w2 indicating that part of the optical plate on which in this case the optical elements 21 are arranged. In general, the total width w1 will be a few millimeters or less. The width of the plate (without optical elements 21) is indicated as w2. Hence, the height of the optical elements 21 in this schematically depicted embodiment is w1-w2. The entire thickness of the lighting unit 100 is again indicated with reference d1.

Fig. 2c schematically depicts a lighting unit with one or more mirrors (specular reflectors) 50. The mirrors may be flat or curved. In this manner the distance of at least about 20 cm, especially at least about 25 cm, is created virtually. A curvature in the specular reflector (not shown) may help to increase the optical efficiency of the assembly as rays normal to the prism plate have higher transmission efficiency. In order to create a ring structure, the LED (plus optional collimator, see also below) can be assembled in a ring structure. Alternatively the LED sources are positioned in a line along the edges of the prism plate and the orientation of their collimating elements can be tilted somewhat as to project a ring of light spots onto the specular reflector (see fig. 2b). The geometrical path length (d; not depicted) in fig. 2c from the light exit surface 11 to the optical plate 20 is the length of a ray 21' between the light exit surface 11 and the mirror 50 and the length 22' between the mirror and the optical plate 20 (which is the length of the reflected ray 21', reflected by mirror 50 in a direction of the optical plate 20). The shortest distance, i.e. the shortest geometrical path length, is preferably at least 20 cm, especially at least 25 cm, such as 30 cm. The thickness d1 may for instance be in the range of 50-400 mm, but also smaller, such as 10-200 mm; however, d1 may also be larger.

Fig. 3a schematically depicts the use of a collimator or collimating element 30, which collimates the light source light 12 from the light source 10. The collimating element 30 in front of the LED package, or another light source, may reduce or prevent total internal reflection in the prismatic cones for angles of incidence that exceed 7 degrees with respect to the normal (to the upstream face 23 of the optical plate). Hence the collimating element is preferred to collimate as much as possible within preferably 14 degrees full angle. Less collimation will still work but as explained reduces the optical efficiency of the luminous flux exiting the prismatic plate.

Fig. 3b schematically depicts the dimensions d2 of the light exit face. The reference d2 reflects width and length (which may in principle be different), or optionally diameter. The length/width d2 will in general be in the range of about 1 mm, thereby creating a light exit surface of about 1 mm².

Figs. 3c-3d schematically shows the apex of a tapering structure such as a pyramid or a cone (here a cone). Although cones may be applied, also pyramids etc. may be applied. The dimensions at the bottom of the optical element 21 are indicated with reference w. This may again be length and width, or diameter. For optical elements 21 having a bottom (or cross section at the bottom) which is not square, rectangular or circular, w may in also refer to effective length, i.e. the square root of the area at the bottom of the optical element 21.

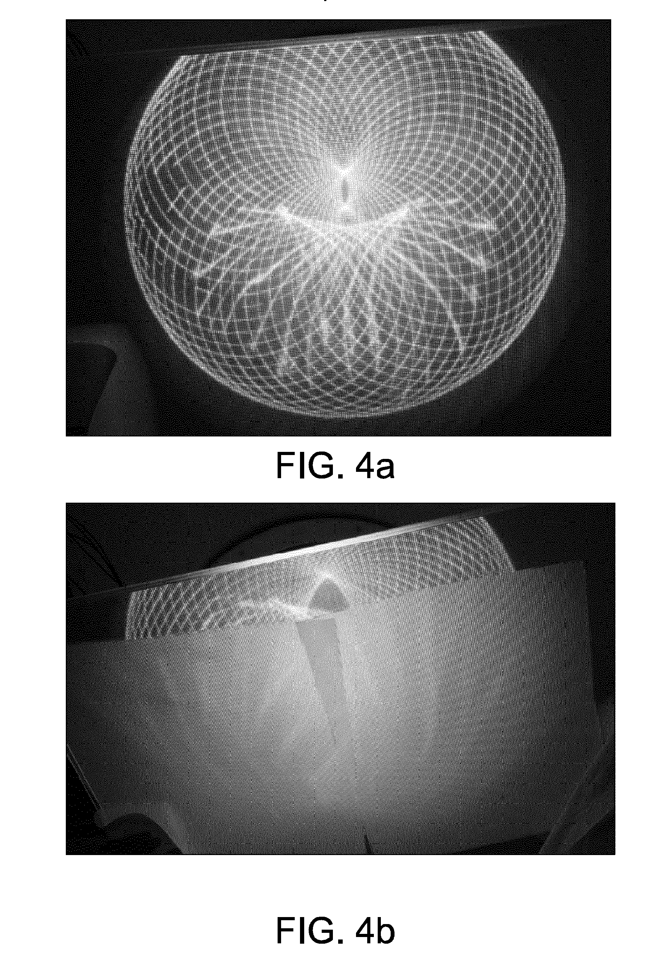

Figs. 4a and 4b shows the luminescent spherical figure created by a collection of LEDs on a ring structure, such as schematically depicted in fig 2a (which may create the inhomogeneous illumination of the optical plate as schematically depicted in fig 1d), when looking from the downstream side to the downstream face 24 of the lighting unit 100 (see e.g. also fig. 1a). Hence, fig. 4a shows the luminescent spherical figure as seen from below when looking into the 2D array of micro optical elements. As the observer approaches the rim of the micro optical array, the spherical figure appears to vanish behind it: motion parallax. Fig. 4b shows what a person observes when taking another position. The 3D projection gradually changes when changing position, whereby a natural change is perceived comparable when looking to a real 3D source. Hence, depth perception can be provided with the lighting unit of the invention.

## Claims

1. A lighting unit (100) comprising a light source (10) and a transmissive optical plate (20), wherein the light source (10) comprises a light exit surface (11) for light source light (12), wherein the transmissive optical plate (20) comprises an upstream face (23) directed to the light exit surface (11) of the light source (10) and a downstream face (24) arranged away from the light exit surface (11) of the light source, wherein the transmissive optical plate (20) comprises at least a 2D array of micro optical elements (21) for refraction of the light source light (12) in a direction away of the downstream face (24), wherein the geometrical path length (d) for light source light (12) from the light exit surface (11) to the transmissive optical plate (20) is at least 20 cm.

2. The lighting unit (100) according to claim 1, wherein the geometrical path length (d) is at least 25 cm.

3. The lighting unit (100) according to any one of the preceding claims, wherein the light source (10) is configured to illuminate the upstream face (23) inhomogeneously.

4. The lighting unit (100) according to any one of the preceding claims, wherein the micro optical elements (21) have conical shapes, directing away from the exit surface (11), with cone angles (α) in the range of 100-145°, and wherein the cones have a diameter (w) at the base of the cone in the range of 0.1-5 mm.

5. The lighting unit (100) according to claim 4, wherein the micro optical elements (21) have conical shapes, directing away from the exit surface (11), with cone angles (α) in the range of 108-140°.

6. The lighting unit (100) according to any one of the preceding claims, wherein the light source comprises a plurality of light exit surfaces (11).

7. The lighting unit (100) according to claim 6, wherein the plurality of light exit surfaces (11) are arranged in a circle or in an ellipse.

8. The lighting unit according to any one of claims 6-7, wherein the light source (10) comprises a plurality of light emitting devices (LEDs).

9. The lighting unit according to any one of claims 6-7, wherein the plurality of light exit surfaces (11) comprise a plurality of light outcoupling structures (111).

10. The lighting unit according to any one of claims 6-7, wherein the light source (10) is configured to illuminate the upstream face (23) in an indirect way.

11. The lighting unit (100) according to any one of the preceding claims, further comprising a collimator (30), configured to collimate the light source light (12) and configured between the light exit surface (11) and the transmissive optical plate (20).

12. The lighting unit (100) according to any one of the preceding claims, wherein the light exit surface (11) has a surface area in the range of 0.1- 25 mm².

13. Use of the lighting unit (100) according to any one of the preceding claims, comprising a plurality of light exit surfaces (11) to provide a virtual 3D light projection with motion parallax.

14. Use of the lighting unit (100) according to claim 13, comprising a plurality of light exit surfaces (11) arranged in a circle or in an ellipse and comprising conically shaped optical elements (21) to provide a virtual 3D spherical light projection with motion parallax.
